# EUROPEAN PATENT APPLICATION

(11) **EP 2 410 666 A1**
(43) Date of publication of application: **25.01.2012**
(21) Application number: 10753070.1
(22) Date of filing: 15.03.2010
(51) Int. Cl.: H04B 7/14, H04L 1/18

(54) **RELAY COMMUNICATION METHOD, SYSTEM AND DEVICE THEREOF**

(30) Priority: 16.03.2009 CN 200910047829
(71) Applicant: Alcatel Lucent, 75008 Paris (FR)
(72) Inventor: YANG, Tao, Shanghai 201206 (CN)
(74) Representative: 2SPL Patentanwälte
(86) International application number: PCT/CN2010/000316
(87) International publication number: WO 2010/105503

(57) **Abstract**

There is provided a relay communication method, a corresponding relay node, mobile terminal and communication system. The method is used for the relay node provided between the base station and the mobile terminal, comprising: sending to the mobile terminal an HARQ process acknowledgement message regardless of result of the relay node decoding signal received from the mobile terminal ; the mobile terminal stopping the HARQ process according to the HARQ process acknowledgement message. The above techncial solution can avoid a collision between communication beween the mobile terminal and the relay node and communciation between the relay node and the base station, thereby providing a reliable relay comunication system and relay communication method, and can be easily implemented without need to modify the LTE standard.

## Description

### Field of the Invention

The present invention relates to relay communication, and particularly to a method, system and apparatus for relay communication.

### Background of the Invention

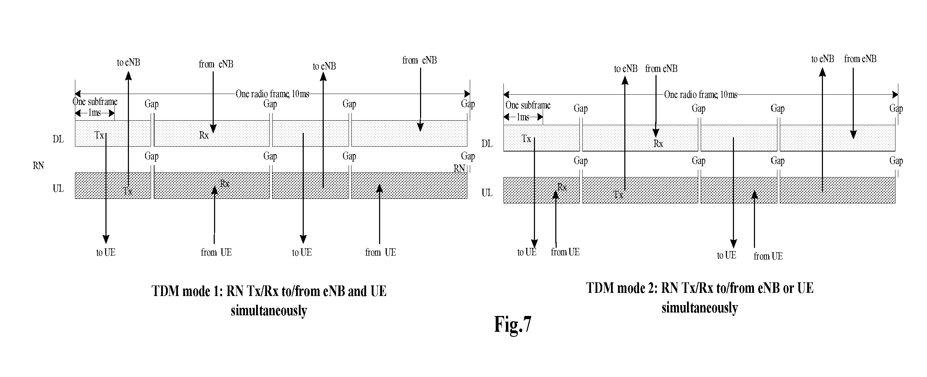

According to current 3GPP LTE-advanced standard status, Relay concept is already agreed as an important candidate to improve system performance, wherein relay is implemented via use of a relay node (RN). The in-band TDM (time division multiplexing) scheme was proposed and shared by many companies to operate Relay in a cellular system. In general speaking, there are two TDM operation modes proposed in R1-084136 as shown in Figure 7.

For mode 1, RN must perform data sending or receiving function at different subframes, i.e., only perform sending or only perform receiving at the same subframe; For mode 2, RN communicates with a base station (eNB) or mobile terminal (UE) at different subframes, i.e., only communicates with eNB or UE at the same subframe.

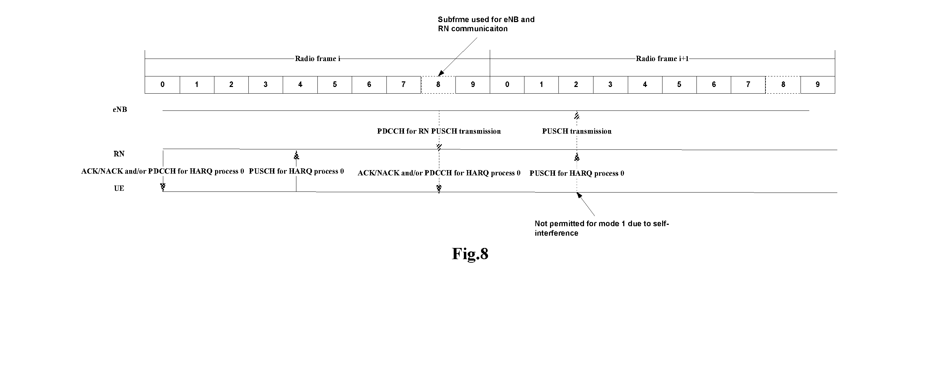

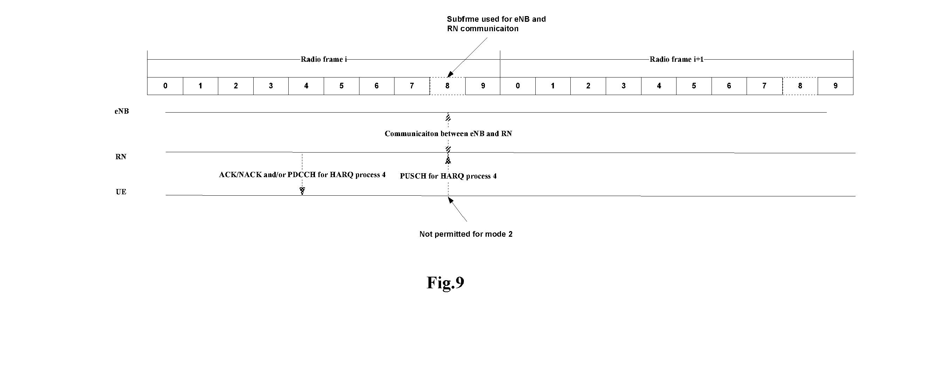

Support for an LTE user is a very important requirement for LTE-Advanced system. How to support LTE UE by TDM operated RN is a very critical issue for RN application. Taking into account the UL synchronous HARQ mechanism for LTE UE operation, the following challenges exist for the proposed TDM operation principle:
1) Due to the HARQ mechanism used, for mode 1, there must be a subframe (as shown by a subframe 2 of a radio frame i+1 in Fig.8) where RN performs UL transmission to eNB and UE is also performing UL transmission to RN. This will lead to self-interference to RN.
2) Due to the HARQ mechanism used, for mode 2, when the RN is communicating with eNB, the UE is performing UL transmission to RN (as shown by a subframe 8 of a radio frame i in Fig.9). This is not permitted by mode 2.

In Fig.8 and Fig.9, each radio frame subframe 8 is a reserved subframe, i.e., the first two symbols are used for communication with the UE, and the remaining symbols of the subframe 8 are only used for communication between the RN and eNB.

As shown in Fig.8, for mode 1, when the reserved subframe is used to indicate the RN to perform UL transmission, the PUSCH transmission will be performed from RN to eNB 4ms later. At the same time, at the UE side, according to synchronous HARQ mechanism, the PUSCH transmission from UE to RN on HARQ process 0 will also be performed. Then self-interference happens to RN.

Similarly, for figure 9, when the subframe (the subframe 8 of the radio frame i) is used for eNB and RN communication, the PUSCH transmission on HARQ process 4 will also be performed, which means the mode 2 can not be implemented.

Therefore, a method is needed to be provided to resolve the above issues without any change to the UE operation.

### Summary of the Invention

An object of the present invention is to provide a method and system for relay communication to eradicate collision present in the prior art.

There is provided a relay communication method for use in a relay node provided between a base station and a mobile terminal, the method comprising: sending to the mobile terminal an HARQ process acknowledgement message regardless of result of the relay node decoding signal received from the mobile terminal; the mobile terminal stopping the HARQ process according to the HARQ process acknowledgement message.

There is provided a relay node for performing relay communication between a base station and a mobile terminal, comprising: an HARQ stop indicating means for indicating sending an HARQ process acknowledgement message regardless of result of the relay node decoding signal received from the mobile terminal; sending means for sending the HARQ process acknowledgement message to the mobile terminal according to the indication of the HARQ stop indicating means, wherein the mobile terminal stops the HARQ process according to the HARQ process acknowledgement message.

There is provided a mobile terminal for communicating with a base station via a relay node, the mobile terminal comprising: receiving means for receiving an HARQ process acknowledgement message from the relay node, wherein the sending of the HARQ process acknowledgement message is regardless of the result of the relay node decoding signal received from the mobile terminal; HARQ stopping means for stopping the HARQ process according to the HARQ process acknowledgement message received by the receiving means.

There is provided a communication system, comprising a base station, a relay node and a mobile terminal recited above, for relay communication between the mobile terminal and the base station via the relay node.

As can be seen from the above, by sending the HARQ process acknowledgment message to the mobile terminal, the mobile terminal does not perform the HARQ progress at a position where a collision might happen, the above techncial solution avoids a collision between communication beween the mobile terminal and the relay node and communciation between the relay node and the base station, thereby providing a reliable relay comunication system and relay communication method.

Meanwhile, the above techical solution can be easily implemented without need to change the mobile terminal and modify the LTE standard.

### Brief Description of the Accompanying Drawings

Advantages of the present invention will be made more apparent by the following depictions with reference to the drawings, wherein:
Fig.1 illustrates a schematic view of a communication system according to an embodiment of the present invention;
Fig.2 illustrates a block diagram of a relay node in the system as shown in Fig.1;
Fig.3 illustrates a block diagram of a mobile terminal in the system as shown in Fig.1;
Fig.4 illustrates a flowchart of a relay communication method according to an embodiment of the present invention;
Fig.5 illustrates a schematic view of a frame for the first mode in the system and method according to an embodiment of the present invention;
Fig.6 illustrates a schematic view of a frame for the second mode in the system and method according to an embodiment of the present invention;
Fig.7 illustrates schematic views of frames for two TDM operation modes in the art;
Fig.8 illustrates a schematic view of a frame for the first mode in the prior art;
Fig.9 illustrates a schematic view of a frame for the second mode in the prior art.

### Detailed Description of Preferred Embodiments

The present invention will be described in detail with reference to the drawings.

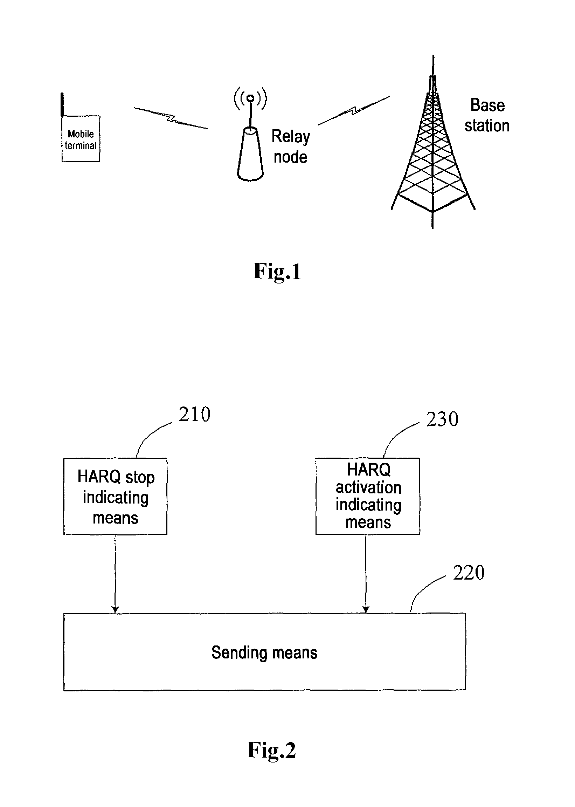

Fig.1 illustrates a schematic view of a communication system according to an embodiment of the present invention. As shown in Fig.1, the system comprises a relay node (RN), a mobile terminal (UE) and a base station (eNB), and can perform relay communication from the mobile terminal to the base station via the relay node.

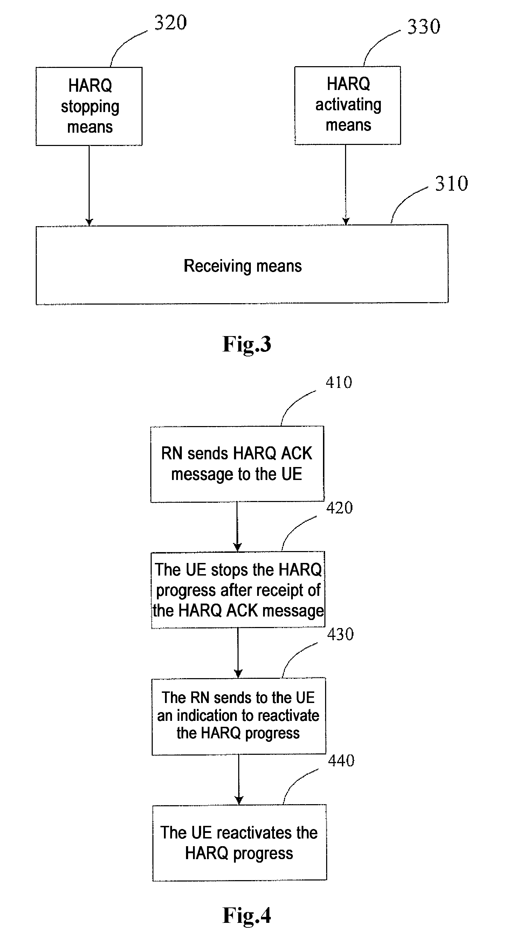

Fig.2 illustrates a block diagram of the relay node in the system as shown in Fig.1. Fig.3 illustrates a block diagram of the mobile terminal in the system as shown in Fig.1. For the sake of brevity, Fig.2 and Fig.3 both only illustrate components relevant to the embodiment of the present invention, but this does not mean that other components cannot be included.
Fig.2 is a schematic view of the relay node according to the embodiment of the present invention. The relay node is used to perform relay communication between the base station and the mobile terminal. As shown in Fig.2, the relay node at least has an HARQ stop indicating means 210 for indicating sending an HARQ process acknowledgement message regardless result of the relay node decoding signal received from the mobile terminal; sending means 220 for sending the HARQ process acknowledgement message to the mobile terminal according to the indication of the HARQ stop indicating means 210.

The relay node can further comprises HARQ activation indicating means 230 for indicating the sending means 220 to send an indication to the mobile terminal to reactivate the HARQ process if the relay node does not communicate with the base station; sending means 220 is further for sending an indication to the mobile terminal to reactivate the HARQ process according to the indication of the HARQ activation indicating means 230.

Fig. 3 is a schematic view of the mobile terminal according to the embodiment of the present invention. The mobile terminal is used to communicate with the base station via the relay node. As shown in Fig.3, the mobile terminal at least has receiving means 310 for receiving the HARQ process acknowledgement message from the relay node, wherein the sending of the HARQ process acknowledgement message is regardless of the result of the relay node decoding signal received from the mobile terminal; HARQ stopping means 320 for stopping the HARQ process after receipt of the HARQ process acknowledgement message by the receiving means 310.

The receiving means 310 is further used to receive from the relay node an indication to reactivate the HARQ process, and the mobile terminal further comprises HARQ activating means 330 for reactivating the HARQ process according to the indication of reactivating the HARQ process received by the receiving means 310.

Although the relay node and the mobile terminal of the embodiment are described in the form of separate function modules, each component as shown in Fig.2 and Fig.3 can be implemented by a plurality of elements in practical applications, and the plurality of components as shown can be integrated into a chip or a device. A technical flow of the relay communication performed via interaction of the relay node and the mobile terminal is described in detail as below.

Fig.4 illustrates a flowchart of a relay communication method according to an embodiment of the present invention. As shown in Fig.4,

In step 410, the relay node sends the HARQ process acknowledgement message to the mobile terminal.

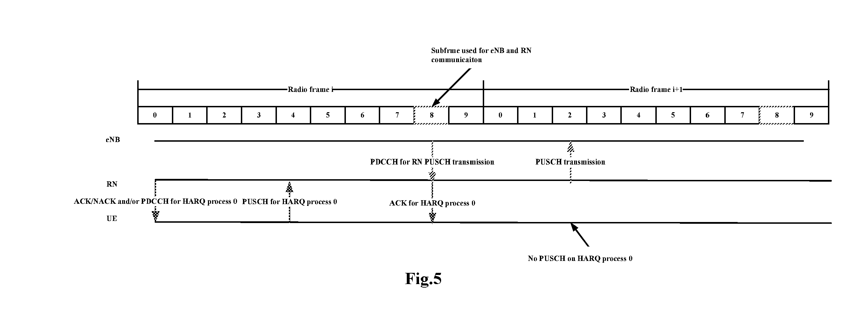

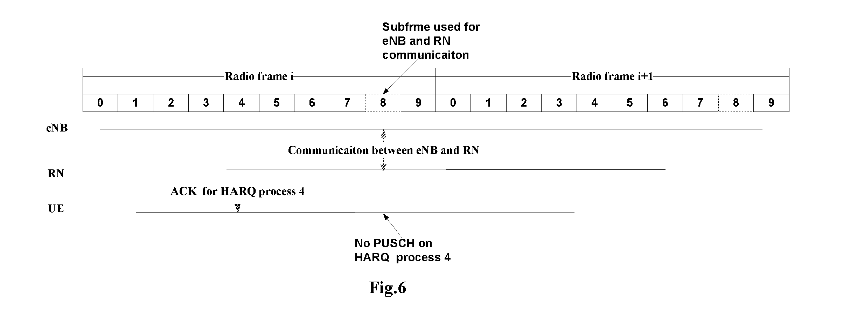

Fig.5 and Fig.6 respectively illustrate a schematic view of a frame for the first mode and for the second mode in the system and method according to an embodiment of the present invention. In Fig.5 and Fig.6, assume that each radio frame subframe 8 is a reserved subframe, the first two symbols are used for communication with the UE, and the remaining symbols of the subframe 8 are only used for communication between the RN and eNB. Certainly, those having ordinary skill in the art should appreciate that the reserved subframe can be at any position in a frame and not limited to the subframe 8. Likewise, in the reserved subframe, more symbols or less symbols can be used to communicate with the UE.

In LTE, it has already defined that UE should stops its UL HARQ process if ACK message is received till the reactivation information is received from the base station side. So in LTE-advanced system, if the RN sends down ACK message, the LTE UE also has to stop its corresponding UL HARQ process, which means the compacted PUSCH transmission will not be performed 4ms later without further indication.

In the embodiment of the present invention, based on this LTE UE operation principle, for TDM mode 1, during the subframe (subframe 8 of the radio subframe i) for eNB and RN communication, the HARQ stop indicating means 210 in the RN indicates the sending mean 220 to send down the HARQ ACK message to the UE regardless of whether the decoding result of the RN decoding the signal received from the UE are success or failure, that is, whether the RN sends down the HARQ ACK message is irrelevant to the decoding result thereof. The HARQ stopping means 320 at the UE side will not perform the PUSCH transmission on this HARQ process any more 4ms later, and then the collision occurring in the first mode in the prior art can be eliminated, as shown in Fig.5.

In the above step, the HARQ stop indicating means 210 in the RN indicates the sending means 220 to send down the HARQ ACK message to the UE on the reserved subframe. However, in other embodiments, the message can also be sent on other subframes before the reserved subframe, preferably, the selected subframe for sending down the HARQ ACK message is spaced apart from the reserved subframe a distance of an integer times 4ms. For example, take Fig.5 as an example, the HARQ ACK message can also be sent down on the subframe 0 of the radio subframe i or the subframe 4 of the radio frame i such that after 4ms thereafter (the subframe 4 or subframe 8 of the radio frame i), the HARQ stopping means 320 of the UE does not perform the PUSCH transmission on the HARQ process any more. According to the structure of the frame employed by the embodiment of the present invention, the length of one subframe is 1ms, and the 4ms herein corresponds to the length of four subframes.

Similarly, for mode 2, to avoid the PUSCH transmission on the subframe reserved for eNB and RN communication, the HARQ stop indicating means 210 in the RN can indicate the sending means 220 to send down the HARQ ACK message to the UE 4ms before the reserved subframe (the subframe 4 of the radio frame i), and the HARQ stopping means 320 of the UE will not perform the PUSCH transmission on the HARQ process any more after 4ms(on the reserved subframe). As shown in Fig.6, the collision occurring in the second mode in the prior art can be eliminated.

Likewise, for mode 2, in other embodiments, the message can also be sent on other subframes before the subframe 4 of the radio frame i, preferably, the selected subframe for sending down the HARQ ACK message is spaced apart from the reserved subframe a distance of an integer times 4ms. For example, take Fig.5 as an example, the HARQ ACK message can also be sent down on the subframe 0 such that after 4ms thereafter (the subframe 4 of the radio frame i), the HARQ stopping means 320 of the UE does not perform the PUSCH transmission on the HARQ process any more.

In step 420, the mobile terminal stops the HARQ process after receipt of the HARQ process acknowledgement message.

As above stated, after the receiving means 310 of the UE receives the HARQ ACK message, the HARQ stopping means 320 stops the HARQ process. At this time, the UE does not delete data but store the data locally instead.

Optionally, in step 430, if the relay node does not communicate with the base station, an indication to reactivate the HARQ process is sent to the mobile terminal.

If in the current subframe RN does not communicate with the eNB, the HARQ activation indicating means 230 of the RN indicates the sending means 220 to send to the UE an instruction to reactivate the HARQ process. In the step 440, the HARQ activating means 330 of the UE reactivates the HARQ process according to the instruction received by the receiving means 310, whereupon if the decoding result indicates failure, the UE will resend the locally stored data to the RN.

The length of the frame used in the embodiment of the present invention is 10ms which includes 10 subframes with each subframe being 1ms long. However, those having ordinary skill in the art appreciate that if the number of subframes and the length of the frame or subframe changes, the method and system disclosed in the embodiment of the present invention can still be used for relay communication. At this time, the only thing to be done is to change the above 4ms according to new frame structure requirement.

Those skilled in the art may readily appreciate that different steps of the above method may be performed by a programming computer. Thus, some embodiments are intended to cover program storage devices, for example, a digital data storage medium that may be machine or computer-readable and cover a programmed machine-executable or computer-executable instruction program, wherein these instructions perform part or all of the steps of the above method. The program storage medium, for example, may be a digital storage, a magnetic storage medium (such as magnetic diskette or magnetic tape), hardware or optical readable digital data storage medium. The embodiments are also intended to cover a computer programmed to execute steps of the above method.

The above description and figures only illustrate principle of the present invention. Therefore, it should be appreciated that those skilled in the art can propose different structures. Although these different structures are not explicitly described or indicated herein, they reflect the principle of the present invention and are included within the spirit and scope of the present invention. Besides, all the examples mentioned herein are definitely mainly used for teaching purpose and assist readers in understanding the principle of the present invention and concept conceived by the inventor and promoting progress of the field, and should not be interpreted as limiting to these particularly-mentioned examples and conditions. Besides, statements of the principle, aspect and embodiment of the present invention and specific examples thereof as mentioned herein include their equivalents.The above description is only for implementing the embodiments of the present invention. Those skilled in the art should appreciate that any modifications or partial substitution without departure from the scope of the present invention fall within the scope defined by the appended claims of the present invention. Therefore, the scope of protection of the present invention shall be subjected to the protection scope of the appended claims.

## Claims

1. A relay communication method for use in a relay node provided between a base station and a mobile terminal, comprising:
sending to the mobile terminal an HARQ process acknowledgement message regardless of result of the relay node decoding signal received from the mobile terminal;
the mobile terminal stopping the HARQ process according to the HARQ process acknowledgement message.

2. The relay communication method according to claim 1, further comprising:
sending an indication to the mobile terminal to reactivate the HARQ process if the relay node does not communicate with the base station;
the mobile terminal reactivating the HARQ process according to the indication.

3. The method according to claim 1 or 2, wherein communication is performed between the relay node and the base station, and the mobile terminal via a communication frame, the communication frame includes a reserved subframe, wherein the step of sending the HARQ process acknowledgement message to the mobile terminal comprises sending to the mobile terminal the HARQ process acknowledgement message at the reserved subframe or at a position of a first predetermined time before the reserved subframe.

4. The method according to claim 3, wherein the first predetermined time is an integer times the length of four subframes.

5. The method according to claim 4, wherein the step of the mobile terminal stopping the HARQ process according to the HARQ process acknowledgement message comprises the mobile terminal stopping the HARQ process after a second predetermined time after receipt of the HARQ process acknowledgement message.

6. The method according to claim 5, wherein the second predetermined time is the length of four subframes.

7. A relay node for performing relay communication between a base station and a mobile terminal, comprising:
an HARQ stop indicating means for indicating sending an HARQ process acknowledgement message regardless of result of the relay node decoding signal received from the mobile terminal;
sending means for sending the HARQ process acknowledgement message to the mobile terminal according to the indication of the HARQ stop indicating means,
wherein the mobile terminal stops the HARQ process according to the HARQ process acknowledgement message.

8. The relay node according to claim 7, further comprising:
HARQ activation indicating means for indicating the sending means to send an indication to the mobile terminal to reactivate the HARQ process if the relay node does not communicate with the base station.

9. A mobile terminal for communicating with a base station via a relay node, the mobile terminal comprising:
receiving means for receiving an HARQ process acknowledgement message from the relay node, wherein the sending of the HARQ process acknowledgement message is regardless of the result of the relay node decoding signal received from the mobile terminal;
HARQ stopping means for stopping the HARQ process according to the HARQ process acknowledgement message received by the receiving means.

10. The mobile terminal according to claim 9, wherein the receiving means is further used to receive from the relay node an indication to reactivate the HARQ process,
the mobile terminal further comprises:
HARQ activating means for reactivating the HARQ process according to the indication to reactivate the HARQ process received by the receiving means.

11. A communication system, comprising a base station, a relay node according to claim 7 or 8 and a mobile terminal according to claim 9 or 10, for relay communication between the mobile terminal and the base station via the relay node.
